# EUROPEAN PATENT APPLICATION

(11) **EP 2 765 539 A1**
(43) Date of publication of application: **13.08.2014**
(21) Application number: 13186358.1
(22) Date of filing: 27.09.2013
(51) Int. Cl.: G06Q 10/00

(54) **Energy management supporting apparatus, method for controlling energy management supporting apparatus, control program, and recording medium**

(30) Priority: 08.02.2013 JP 2013023603
(71) Applicant: Omron Corporation, Kyoto-shi, Kyoto 600-8530 (JP)
(72) Inventor: Endo, Maki, Kyoto, Kyoto 600-8530 (JP); Lee, Sangryul, Kyoto, Kyoto 600-8530 (JP); Hattori, Reiko, Kyoto, Kyoto 600-8530 (JP); Shibagaki, Saeko, Kyoto, Kyoto 600-8530 (JP); Yamamura, Kenji, Kyoto, Kyoto 600-8530 (JP)
(74) Representative: Isarpatent

(57) **Abstract**

An energy management supporting apparatus (1) for managing an energy consumption of at least two types of equipment out of air-conditioning equipment (4), production equipment (3) and general equipment (5) provided in a prescribed region (6) is provided. The apparatus (1) is characterized by comprising: an acquiring part (21) configured to acquire an energy consumption of each of the various types of equipment (3, 4, 5); a specific consumption calculating part (22) configured to calculate a magnitude of the energy consumption of each of the various types of equipment (3, 4, 5) relative to a size of a region where each of the various types of equipment (3, 4, 5) is provided as a specific consumption of each of the various types of equipment (3, 4, 5), based on the energy consumption of each of the various types of equipment (3, 4, 5) acquired by the acquiring part (21); and an output part (26) configured to output the specific consumption of each of the at least two types of equipment calculated by the specific consumption calculating part (22).

## Description

### TECHNICAL FIELD

The present invention relates to an energy management supporting apparatus, a method for controlling an energy management supporting apparatus, a control program, and a recording medium, each directed to support energy management.

### BACKGROUND ART

In recent years, energy consumption is attracting increasing public attention, ranging from large-scale electricity consumers such as operators of commercial buildings or factories to ordinary households. In keeping therewith, various measures to conserve energy has been taken. Conventionally, there is proposed an energy management system such as the BEMS (Building Energy Management System) as a technique for supporting energy conservation, in which energy data of a plurality of pieces of equipment in a building is collected; the measured value of the energy data are compared against the management value (theoretical value); and the comparison result is displayed (for example, see Japanese Unexamined Patent Publication No. 2011-248568, published on December 8, 2011).

Further, the team of the inventors of the present invention has developed an energy management supporting system in which the specific consumption of each production equipment and that of air-conditioning equipment and the like are calculated, and each of the calculated values and the target value determined in advance for each type of equipment are compared with each other, thereby managing the energy usage status of each equipment.

However, the conventional techniques as described above are disadvantageous in that comparison among different types of equipment is difficult. Specifically, since the production equipment and the air-conditioning equipment are different from each other in the element of improving the energy effectiveness, the specific consumption of the production equipment and the specific consumption of the air-conditioning equipment have different meanings. Accordingly, the energy effectiveness (specific consumption) of the production equipment and the energy effectiveness (specific consumption) of the air-conditioning equipment cannot be simply compared with each other. Accordingly, it is difficult to optimize the energy effectiveness of the entire building provided with various types of equipment such as the production equipment and the air-conditioning equipment.

The present invention has been devised in view of the problems described above, and an object thereof is to realize an energy management supporting apparatus, a method for controlling an energy management supporting apparatus, a control program, and a recording medium, each facilitating comparison among different types of equipment.

### SUMMARY

In accordance with one aspect of the present invention, an energy management supporting apparatus for managing an energy consumption of at least two types of equipment out of air-conditioning equipment, production equipment and general equipment provided in a prescribed region, comprises: an acquiring part configured to acquire an energy consumption of each of the various types of equipment; a specific consumption calculating part configured to calculate a magnitude of the energy consumption of each of the various types of equipment relative to a size of a region where each of the various types of equipment are provided, as a specific consumption of each of the various types of equipment, based on the energy consumption of each of the various types of equipment acquired by the acquiring part; and an output part configured to output the specific consumption of each of the at least two types of equipment calculated by the specific consumption calculating part.

### BRIEF DESCRIPTION OF THE DRAWINGS

Fig. 1 is a block diagram showing the substantial configuration of an energy management supporting apparatus of an embodiment of the present invention;
Fig. 2 is a diagram showing an exemplary usage manner of the energy management supporting apparatus;
Fig. 3 is a diagram showing an exemplary provision of various sensors in a building where an air-conditioning equipment is provided;
Fig. 4 is a flowchart showing an exemplary process with the energy management supporting apparatus;
Fig. 5 is a diagram showing a method of calculating a specific consumption of the building;
Fig. 6 is a diagram showing a method of calculating elements forming an air-conditioning specific consumption;
Fig. 7 is a diagram showing a method of calculating elements forming a general specific consumption;
Fig. 8 is a diagram showing a method of calculating elements forming a product specific consumption; and
Figs. 9, 10, 11, 12, 13, 14, and 15 each shows an exemplary display screen displayed on a display unit of the energy management supporting apparatus.

### DETAILED DESCRIPTION

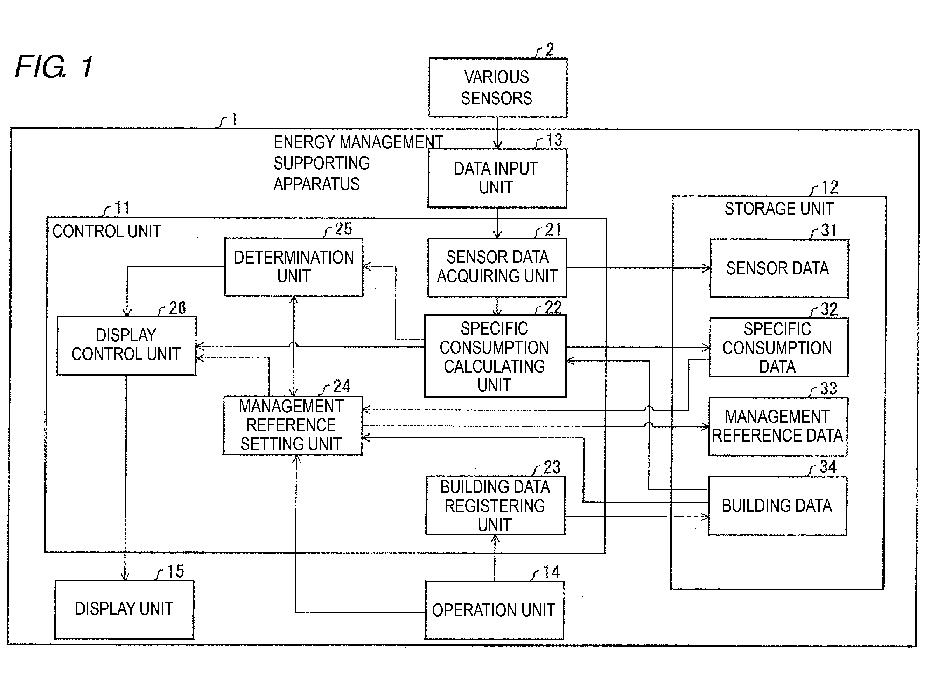

In the following, an embodiment of the present invention will be described with reference to Figs. 1 to 15.

### [As to Usage Manner of Energy Management Supporting Apparatus]

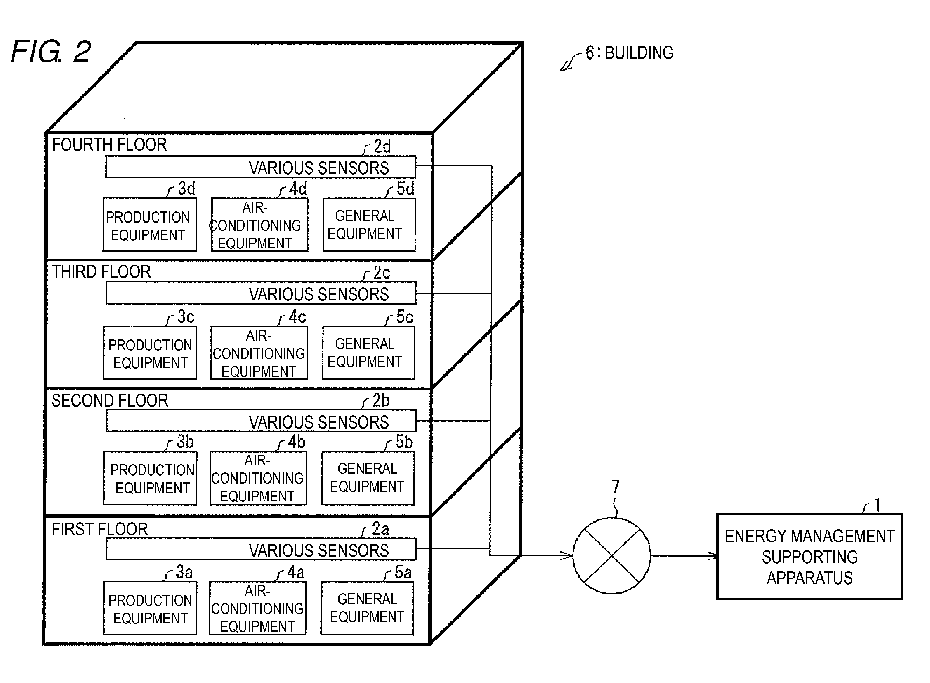

Firstly, with reference to Fig. 2, the usage manner of the energy management supporting apparatus according to the present embodiment will be described. Fig. 2 is a diagram showing an exemplary usage manner of an energy management supporting apparatus 1 according to the present embodiment.

The energy management supporting apparatus 1 presents the energy usage status of production equipment, air-conditioning equipment and general equipment, to thereby support the optimization of the energy effectiveness of those pieces of equipment and that of the entire building where those pieces of equipment are provided. As shown in Fig. 2, in the present embodiment, it is understood that the energy management supporting apparatus 1 manages the energy consumption of production equipment 3a to 3d, air-conditioning equipment 4a to 4d and general equipment 5a to 5d provided in a building 6.

Note that, in the following, when the production equipment 3a to 3d are not distinguished from one another, the production equipment 3a to 3d are collectively referred to as the production equipment 3. Further, when the air-conditioning equipment 4a to 4d are not distinguished from one another, the air-conditioning equipment 4a to 4d are collectively referred to as the air-conditioning equipment 4. Still further, when the general equipment 5a to 5d are not distinguished from one another, the general equipment 5a to 5d are collectively referred to as the general equipment 5.

The production equipment 3 operates by consuming energy such as electricity, gas and fuel, and directly relates to the product production activities. The production equipment 3 may be, for example, a machine or an apparatus, a jig and tool, and conveyer or storage equipment. The production equipment 3 is structured by one or more devices. The production equipment 3 is also referred to as power.

The air-conditioning equipment 4 adjusts the temperature, humidity and the like of a prescribed space. The air-conditioning equipment 4 is structured by one or more heat source machine, one or more hot and cold water pumps, one or more air handling units (AHUs) and the like. Note that, when air is to be cooled, the heat source machine includes, for example, a cooling tower, a cooling water pump and a refrigerator, the cooling water pump conveying cooling water from the cooling tower to the refrigerator.

The general equipment 5 is energy consumption equipment other than the production equipment 3 and the air-conditioning equipment 4. The general equipment 5 is, for example, illumination equipment and a terminal (such as a PC). Generally, the production equipment 3 and the air-conditioning equipment 4 are provided with separate power supplies. Any electrical device operating by a power supply (ordinary power supply) being different from those of the production equipment 3 and the air-conditioning equipment 4 may serve as the general equipment 5.

Note that, the production equipment 3, the air-conditioning equipment 4 and the general equipment 5 operate by consuming any energy such as electricity, gas, and fuel. In the present embodiment, it is understood that those pieces of equipment are each structured with an electrical device that operates by electricity.

Various sensors 2a to 2d measure (sense) physical quantities relating to the pieces of equipment. For example, the various sensors 2a to 2d measure (sense) the energy consumption of the production equipment 3, that of the air-conditioning equipment 4 and that of the general equipment 5; the number of people in a prescribed region where the equipment is provided; the number, quality and the like of products produced by the production equipment 3; and the temperature, humidity and the like in a prescribed region in the building 6 as well as the temperature, humidity and the like of the outside air. The various sensors 2a to 2d are respectively connected to the energy management supporting apparatus 1 via any network 7 (a wired communicator or a wireless communicator). In the following, when the various sensors 2a to 2d are not distinguished from one another, the various sensors 2a to 2d are collectively referred to as the various sensors 2.

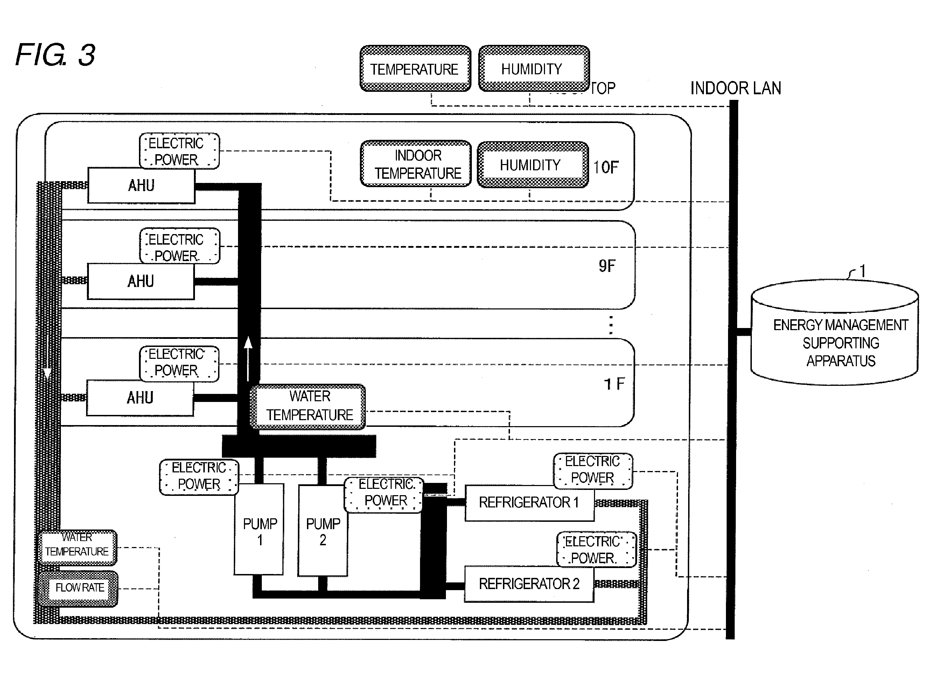

Here, with reference to Fig. 3, an exemplary provision of the various sensors 2 in a building will be described. Fig. 3 is a diagram showing an exemplary provision of the various sensors 2 in the building where the air-conditioning equipment 4 is provided.

As shown in Fig. 3, a power meter is provided to each of refrigerators, pumps, AHUs structuring the air-conditioning equipment 4. Further provided are: a thermometer for measuring the temperature of fluid supplied from the pumps to the AHUs; a thermometer for measuring the temperature of fluid discharged from the AHUs; and a flowmeter for measuring the flow rate of the fluid. Still further provided are a thermo-hygrometer for measuring the temperature and humidity of each floor of the building and a thermo-hygrometer for measuring the outdoor temperature and humidity. Then, as shown in the drawing, those various sensors 2 are connected to the energy management supporting apparatus 1 via the network.

Note that, in the present embodiment, though the energy management supporting apparatus 1 manages the energy of the equipment provided in one building 6, the present invention is not limited thereto. The energy management supporting apparatus 1 may manage the energy of the equipment provided in each of a plurality of buildings 6. In this case, the energy management supporting apparatus 1 can manage the energy for each building as well as the total energy of the plurality of buildings.

Further, though the energy management supporting apparatus 1 manages the energy of three types of equipment, namely the production equipment 3, the air-conditioning equipment 4 and the general equipment 5, the present invention is not limited thereto. The energy management supporting apparatus 1 herein should manage the energy of a plurality of types of equipment.

Still further, in the example shown in Fig. 2, though the production equipment 3, the air-conditioning equipment 4 and the general equipment 5 are provided on every floor, the present invention is not limited thereto. The type of equipment provided on each floor can be arbitrarily determined.

Still further, in the example shown in Fig. 2, though the energy management supporting apparatus 1 is provided outside the building 6, it may be provided inside the building 6.

### [Structure of Energy Management Supporting Apparatus]

The energy management supporting apparatus 1 according to the embodiment of the present invention calculates respectively specific consumptions in the identical unit for each of the various types of equipment, and compares each of the various types of equipment with one another as to the energy effectiveness. This can easily optimize not only the energy effectiveness of those pieces of equipment but also the energy effectiveness of the entire building where those pieces of equipment are provided.

Next, the structure of the energy management supporting apparatus 1 will be described with reference to Fig. 1. As shown in Fig. 1, the energy management supporting apparatus 1 includes a control unit 11, a storage unit 12, a data input unit 13, an operation unit 14, and a display unit 15. Note that the energy management supporting apparatus 1 may include members such as a communication unit, a voice input unit and a voice output unit.

The data input unit 13 is an interface for acquiring timeline data (sensor data) indicative of the physical quantity measured (sensed) by the various sensors 2. As described above, the data input unit 13 and the various sensors 2 are connected to each other via the wireless communicator or the wired communicator.

With the operation unit 14, an instruction signal is input to the energy management supporting apparatus 1, whereby the energy management supporting apparatus 1 is operated. The operation unit 14 may be structured by input devices such as a keyboard, a mouse, a keypad, and operation buttons. Further, a touch panel in which the operation unit 14 and the display unit 15 are integrated may be employed. Still further, the operation unit 14 may be a remote controlling apparatus, such as a remote controller provided separately from the energy management supporting apparatus 1.

The display unit 15 displays images in accordance with the instruction from the control unit 11. The display unit 15 is only required to display images in accordance with the instruction from the control unit 11. For example, an LCD (liquid crystal display), an organic EL display and a plasma display are applicable. Note that, in the present embodiment, though the energy management supporting apparatus 1 includes the display unit 15, the present invention is not limited thereto. For example, the energy management supporting apparatus 1 may provide an output to a display device being provided separately from the energy management supporting apparatus 1.

The control unit 11 performs various calculations and exerts centralized control over each unit of the energy management supporting apparatus 1, by executing a program read out from the storage unit 12 to a temporary storage unit (not shown).

In the present embodiment, the control unit 11 includes, as functional blocks, a sensor data acquiring unit (acquiring part) 21, a specific consumption calculating unit (specific consumption calculating part) 22, a building data registering unit 23, a management reference setting unit (management reference setting part) 24, a determination unit (determination part) 25, and a display control unit (output part) 26. Each of these functional blocks (21 to 26) of the control unit 11 can be realized by a CPU (central processing unit) reading out programs stored in a storage apparatus implemented by a ROM (read only memory) or the like to a temporary storage unit implemented by a RAM (random access memory) or the like and executing the program.

The sensor data acquiring unit 21 acquires sensor data output from the various sensors 2 via the data input unit 13. Specifically, the sensor data acquiring unit 21 acquires, as the sensor data, production electric power data indicative of the power consumption of the production equipment 3, air-conditioning electric power data indicative of the power consumption of the air-conditioning equipment 4, general electric power data indicative of the power consumption of the general equipment 5, head-count data indicative of the number of people in a prescribed region where the equipment is provided, production data indicative of the number and quality of products produced by the production equipment 3, and environment data indicative of the temperature and humidity of the prescribed region in the building 6 and the temperature and humidity of the outside air.

The sensor data acquiring unit 21 outputs the acquired sensor data to the specific consumption calculating unit 22. Further, the sensor data acquiring unit 21 may store the acquired sensor data in the storage unit 12.

Note that, the sensor data acquiring unit 21 is only required to acquire data indicative of at least the energy consumption of each of the various types of equipment.

The specific consumption calculating unit 22 acquires the sensor data from the sensor data acquiring unit 21 and reads out building data (detailed later) from the storage unit 12, and calculates the specific consumption (kWh/m²) of each of the production equipment 3, the air-conditioning equipment 4 and the general equipment 5 based on the sensor data and the building data. Further, the specific consumption calculating unit 22 calculates the specific consumption (kWh/m²) of a prescribed region (e.g., the entire building 6, a certain floor, or a certain room). Note that the specific method for calculating the specific consumption will be detailed later.

The specific consumption calculating unit 22 outputs the calculated specific consumption of each of the production equipment 3, the air-conditioning equipment 4, the general equipment 5, and the entire building 6 to the determination unit 25. Further, the specific consumption calculating unit 22 may store specific consumption data indicative of the calculated specific consumption in the storage unit 12 as timeline data.

When the building data registering unit 23 receives grouping of the production equipment 3, the air-conditioning equipment 4 and the general equipment 5 from the user via the operation unit 14, the building data registering unit 23 generates group data indicative of the grouping of the pieces of equipment. Further, when the building data registering unit 23 receives a floor area of a room, which is a unit obtained by dividing each floor of the building 6, from the user via the operation unit 14, the building data registering unit 23 generates floor area data indicative of the floor area of each room. The building data registering unit 23 stores the building data including the generated group data and the floor area data in the storage unit 12.

Note that, as to grouping, the production equipment 3, the air-conditioning equipment 4 and the general equipment 5 may be grouped on a floor-by-floor basis. For example, the production equipment 3 may be classified into four groups, namely, the production equipment 3a on the first floor of the building 6, the production equipment 3b on the second floor of the building 6, the production equipment 3c on the third floor of the building 6, and the production equipment 3d on the fourth floor of the building 6. Further, the production equipment 3 on a certain floor may be grouped on a line-by-line basis, the line being a unit obtained by functionally dividing the production process of a product. For example, the production equipment 3b on the second floor of the building 6 may be classified into two groups, namely, line B and line C. Further, the production equipment 3 constituting the line may be grouped on a device group-by-device group basis, the device group being made up of one or more devices. Still further, the air-conditioning equipment 4 and the general equipment 5 on a certain floor may be respectively grouped on a room-by-room basis, the room being obtained by dividing the floor. For example, when there are three rooms "North A", "North B" and "South" on the third floor of the building 6, the air-conditioning equipment 4c and the general equipment 5c may each be divided into three groups on a room-by-room basis.

In other words, the production equipment 3, the air-conditioning equipment 4 and the general equipment 5 may each be grouped by one or more layers. Specifically, in the present embodiment, the production equipment 3 is grouped by each of the four layers, namely the building-by-building basis, the floor-by-floor basis, the line-by-line basis, and the device group-by-device group basis. Further, the air-conditioning equipment 4 and the general equipment 5 are each grouped by each of the three layers, namely the building-by-building basis, the floor-by-floor basis, and the room-by-room basis. Here, each group includes one or more piece of production equipment 3, air-conditioning equipment 4 or general equipment 5. Further, a group under a certain group layer is referred to as a sub-group. For example, the sub-group of the production equipment 3 of the building 6 is the production equipment 3 on each of the first to fourth floors.

When the management reference setting unit 24 receives a management reference value from the user, the management reference setting unit 24 generates management reference data indicative of the management reference value. The management reference setting unit 24 outputs the generated management reference data to the determination unit 25. Further, the management reference setting unit 24 may output the generated management reference data to the display control unit 26. Still further, the management reference setting unit 24 may store the generated management reference data in the storage unit 12.

Here, the management reference value is the reference value (target value) for determining whether the value of specific consumption (specific consumption value) is good or poor, the value being calculated by the specific consumption calculating unit 22. The smaller the specific consumption (kWh/m²) is, the better it is. Accordingly, when the specific consumption value of a certain piece of equipment exceeds the management reference value, it means that the effectiveness of that equipment is poor; when the specific consumption value of a certain piece of equipment is equal to or less than the management reference value, it means that the effectiveness of that equipment is good or in a tolerable range.

Further, the user may input the management reference value for the entire building 6, the management reference value for each of the production equipment 3, the air-conditioning equipment 4 and the general equipment 5 in the entire building 6, and the management reference value for each group of each of the production equipment 3, the air-conditioning equipment 4 and the general equipment 5, and the management reference setting unit 24 may set each management reference value based on the inputs from the user. Further, when the management reference setting unit 24 receives the management reference value for the entire building 6 from the user, the management reference setting unit 24 may calculate the management reference value for each of the production equipment 3, the air-conditioning equipment 4 and the general equipment 5, and the management reference value for each group of each the production equipment 3, the air-conditioning equipment 4 and the general equipment 5, based on the management reference value for the entire building 6 having been input.

For example, the management reference setting unit 24 sets the management reference value for the specific consumption of each of the various types of equipment in the entire building 6, based on the proportion of the specific consumption of each of the various types of equipment in the entire building 6 relative to the specific consumption of the building 6 and the user-input management reference value for the entire building 6. Specifically, it is assumed that the proportions of the specific consumptions of the production equipment 3, the air-conditioning equipment 4 and the general equipment 5 in the entire building 6 relative to the specific consumption of the building 6 are 40%, 50% and 10%, respectively. In this case, when 150 kWh/m² is input as the management reference value of the entire building 6, the management reference values for the specific consumptions of the production equipment 3, the air-conditioning equipment 4 and the general equipment 5 are set to be 60 kWh/m², 75 kWh/m² and 15 kWh/m², respectively. Note that the proportions of the specific consumptions of each of the various types of equipment in the entire building 6 relative to the specific consumption of the building 6 may be calculated from the history of the past specific consumptions, by referring to the specific consumption data stored in the storage unit 12.

Further, for example, the management reference setting unit 24 sets the management reference value for the specific consumption of each region in the building 6, based on the proportion of the gross floor area of each region in the building 6 relative to the gross floor area of the building 6 and the user-input management reference value for the entire building 6. Specifically, it is assumed that the proportions of the gross floor area of regions X, Y and Z in the building 6 relative to the gross floor area of the building 6 are 30%, 40% and 30%, respectively. In this case, when 150 kWh/m² is input as the management reference value for the entire building 6, the management reference values for the specific consumptions of the regions X, Y and Z are set to be 45 kWh/m², 60 kWh/m², and 45 kWh/m², respectively.

Further, the management reference setting unit 24 may set the management reference value for the entire building 6, the management reference value for each of the production equipment 3, the air-conditioning equipment 4 and the general equipment 5 in the entire building 6, the management reference value for each group of each of the production equipment 3, the air-conditioning equipment 4 and the general equipment 5, and the management reference value for each of the regions obtained by dividing the building 6 by a prescribed unit, based on the past specific consumption values by the management reference setting unit 24 referring to the specific consumption data stored in the storage unit 12. For example, the management reference setting unit 24 may set the value being the average value of the past specific consumption values + α as each management reference value.

The determination unit 25 determines whether or not the specific consumption value for each of the production equipment 3, the air-conditioning equipment 4, the general equipment 5, and the entire building 6 calculated by the specific consumption calculating unit 22 exceeds the corresponding management reference value. The determination unit 25 outputs the determination result to the display control unit 26.

Further, the determination unit 25 may determine whether or not the specific consumption value of each of the production equipment 3, the air-conditioning equipment 4, the general equipment 5, and the entire building 6 calculated by the specific consumption calculating unit 22 exceeds the specific consumption value of the previous day, the previous week, the previous month or the previous year. Specifically, the determination unit 25 makes decision upon comparison between the specific consumption (kWh/m²) of the daily average of the current day and the specific consumption (kWh/m²) of the daily average of the previous day, the previous week, the previous month or the previous year. Further, the determination unit 25 may make decision upon comparison between the specific consumption (kWh/m²) of the daily average of the current day and the specific consumption (kWh/m²) of the daily average of the same month of the previous year or same date of the previous year.

The display control unit 26 acquires the determination result from the determination unit 25 and displays the acquired determination result on the display unit 15. The display control unit 26 may display, in addition thereto, the timeline data of the specific consumptions calculated by the specific consumption calculating unit 22, the sensor data acquired by the sensor data acquiring unit 21 or the like. Specific exemplary display contents displayed by the display control unit 26 on the display unit 15 will be described later.

Note that, in the present embodiment, though the display control unit 26 presents various data to the user by displayed it on the display unit, the presentation scheme to the user is not limited thereto. For example, the determination result, the specific consumption and the like may be presented to the user by sound.

The storage unit 12 stores programs, data or the like referred to by the control unit 11. For example, the storage unit 12 stores the sensor data 31, the specific consumption data 32, the management reference data 33, the building data 34 and the like.

### [Exemplary Process with Energy Management Supporting Apparatus]

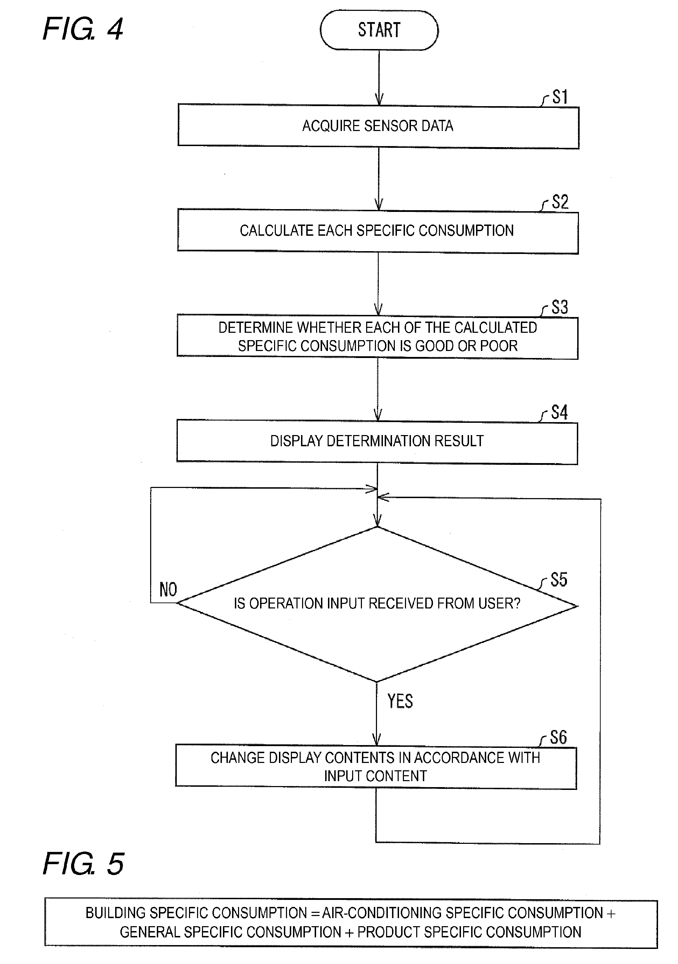

Next, with reference to Fig. 4, an exemplary process with the energy management supporting apparatus 1 will be described. Fig. 4 is a flowchart showing the exemplary process with the energy management supporting apparatus 1.

As shown in Fig. 4, firstly, the sensor data acquiring unit 21 acquires the sensor data output from the various sensors 2 via the data input unit 13 (S1). The specific consumption calculating unit 22 calculates the specific consumption of each of the production equipment 3, the air-conditioning equipment 4, the general equipment 5, and the entire building 6, based on the sensor data and the building data (S2). Subsequently, the determination unit 25 determines whether or not the specific consumption value of each of the production equipment 3, the air-conditioning equipment 4, the general equipment 5, and the entire building 6 calculated by the specific consumption calculating unit 22 exceeds the corresponding management reference value (S3). Then, the display control unit 26 displays the determination result on the display unit 15 (S4).

Here, when an instruction to change the display contents is input by the user (YES in S5), the display control unit 26 displays the display contents as being changed in accordance with the instruction of the user (S6).

Note that, the exemplary display screen displayed by the display control unit 26 will be detailed later.

### [Method for Calculating Specific Consumption]

In the embodiment of the present invention, in order to facilitate comparison of each of the various types of equipment, the specific consumptions of each of the various types of equipment are unified. That is, the specific consumption of equipment is obtained by dividing the energy consumption of the equipment by the gross floor area of the equipment. In the present embodiment, since the energy consumption of each of the various types of equipment is electric energy, the unit of the specific consumption is kWh/m². Note that, it is also possible to convert the energy consumption into cost, and the specific consumption may be obtained by dividing the consumption cost of equipment by the gross floor area of the equipment.

In other words, the specific consumption in the embodiment of the present invention refers to the magnitude of the energy consumption of each of the various types of equipment relative to the size of a region where each of the various types of equipment is provided.

Note that, the gross floor area of the equipment is the gross floor area of a region where the production equipment 3, the air-conditioning equipment 4 or the general equipment 5 is provided. For example, it is assumed that the third floor of the building 6 is divided into three rooms, namely, "North A", "North B" and "South", "North A" having an area of 10 m², "North B" having an area of 15 m², and "South" having an area of 20 m². Further, it is assumed that "North A" is provided with two pieces of production equipment 3, two pieces of air-conditioning equipment 4, and three pieces of illumination equipment; "North B" is provided with a piece of production equipment 3, three pieces of air-conditioning equipment 4, and three pieces of illumination equipment; and "South" is provided with no production equipment 3, four pieces of air-conditioning equipment 4, and four pieces of illumination equipment. In this case, the gross floor area of each of the various types of equipment on the third floor is as follows: 25 m² for the production equipment 3 ("North A" + "North B"), 45 m² for the air-conditioning equipment 4 ("North A" + "North B" + "South"), and 45 m² for the general equipment 5 ("North A" + "North B" + "South").

In this manner, the specific consumption for each of the various types of equipment is calculated, and as shown in Fig. 5, the total of the specific consumption (product specific consumption) of the production equipment 3, the specific consumption (air-conditioning specific consumption) of the air-conditioning equipment 4 and the specific consumption (general specific consumption) of the general equipment 5 is regarded as the specific consumption of the entire building 6. Note that, though the product specific consumption, the air-conditioning specific consumption and the general specific consumption of the entire building 6 are calculated, the present invention is not limited thereto. For example, the specific consumption on a group-by-group basis (e.g., a floor-by-floor basis, a room-by-room basis, a line-by-line basis) may be calculated.

Further, the specific consumption of a prescribed region may be calculated. For example, the specific consumption of a certain floor is calculated as the total for the specific consumptions of the production equipment 3, the air-conditioning equipment 4 and the general equipment 5 provided on the floor. As used herein, a prescribed region refers to the entire building 6, a certain floor in the building 6 or a certain room obtained by dividing the floor.

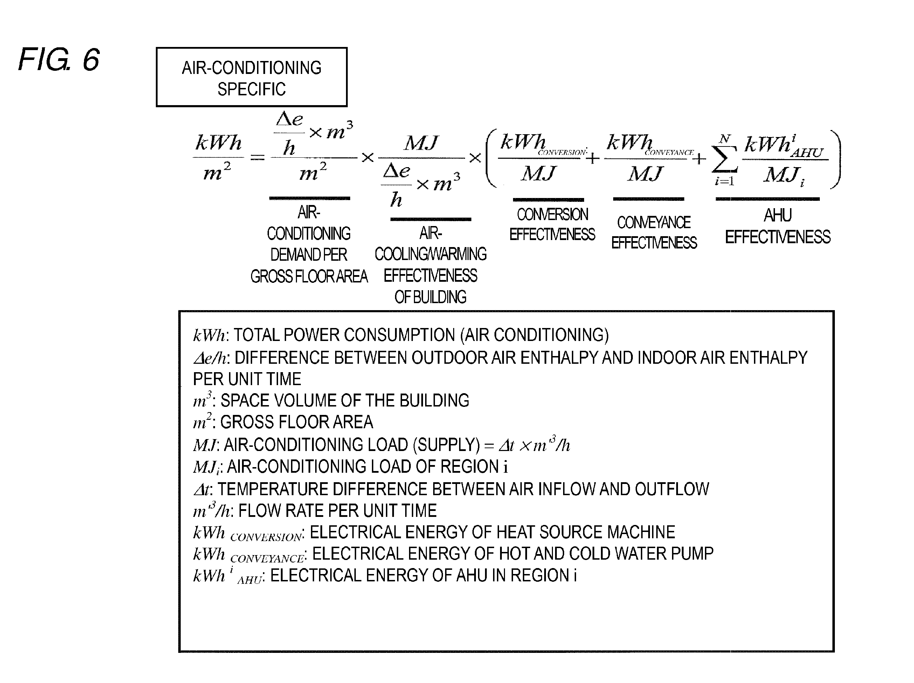

Further, it is understood that the product specific consumption, the air-conditioning specific consumption and the general specific consumption are each represented by a plurality of elements. In connection therewith, a description will be given with reference to Figs. 6 to 8. Note that, here, it is assumed that the building 6 is divided into N-regions, and the building 6 is provided with L pieces of production equipment 3.

Firstly, as shown in Fig. 6, the air-conditioning specific consumption is represented by the product of "air conditioning demand per gross floor area", "air-cooling/warming effectiveness of the building" and "air-conditioning equipment effectiveness". Further, the "air-conditioning equipment effectiveness" is a sum of "conversion effectiveness" being the effectiveness of the heat source machine, "conveyance effectiveness" being the effectiveness of a conveyor system such as the pumps, and "AHU effectiveness" being the effectiveness of the AHUs. That is, the air-conditioning specific consumption is constituted by five elements, namely, the "air conditioning demand per gross floor area", the "air-cooling/warming effectiveness of the building", the "conversion effectiveness", the "conveyance effectiveness", and the "AHU effectiveness".

Specifically, the "air conditioning demand per gross floor area" is calculated by "the difference between outdoor air enthalpy and indoor air enthalpy per unit time" × "space volume of the building" / "gross floor area of the building". Further, the "air-cooling / warming effectiveness of the building" is calculated by "air-conditioning load" / ("the difference between outdoor air enthalpy and indoor air enthalpy per unit time" × "space volume of the building"). Further, the "conversion effectiveness" is calculated by "energy consumption of heat source machine" / "air-conditioning load". Further, the "conveyance effectiveness" is calculated by "energy consumption of the conveyor system" / "air-conditioning load". Further, the "AHU effectiveness" is calculated by a total sum of "energy consumption of the AHU in region i" / "air-conditioning load in region i".

Note that, in the example shown in Fig. 6, in order to calculate the elements of the air-conditioning specific consumption of the entire building 6, the "space volume of the building" is used. However, in calculating the elements of the air-conditioning specific consumption on a floor-by-floor basis or a room-by-room basis, "space volume of the floor" or "space volume of the room" may be used instead.

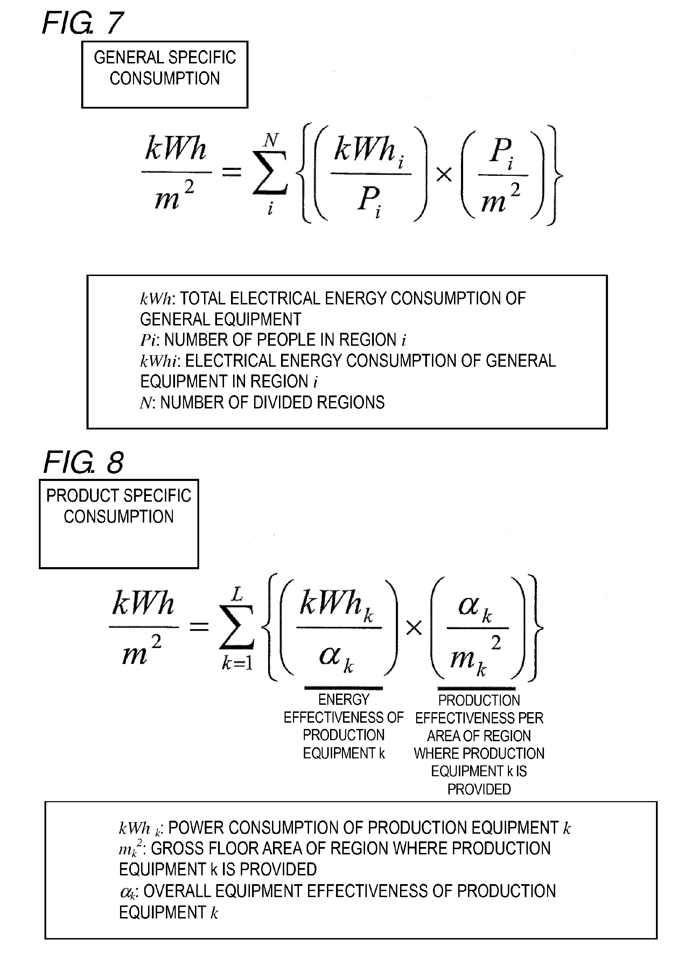

Next, as shown in Fig. 7, the general specific consumption is represented by a total sum of the product of "energy consumption of the general equipment provided in region i per person in region i" and "the number of people in region i per gross floor area". That is, the general specific consumption is constituted by two elements of the "energy consumption of the general equipment provided in region i per person in region i" and "the number of people in region i per gross floor area".

Specifically, the "energy consumption of the general equipment provided in region i per person in region i" is calculated by "electrical energy consumption of the general equipment provided in region i" / "the number of people in region i". Further, "the number of people in region i per gross floor area" is calculated by "the number of people in region i" / "gross floor area".

Next, as shown in Fig. 8, the product specific consumption is represented by a total sum of the product of "energy effectiveness of the production equipment k" and "production effectiveness per area of a region where the production equipment k is provided". That is, the product specific consumption is constituted by two elements of the "energy effectiveness of the production equipment k" and the "production effectiveness per area of a region where the production equipment k is provided".

Specifically, the "energy effectiveness of production equipment k" is calculated by "power consumption of production equipment k" / "overall equipment effectiveness of production equipment k". Further, the "production effectiveness per area in a region where production equipment k is provided" is calculated by "overall equipment effectiveness of production equipment k" / "the gross floor area of a region where production equipment k is provided".

Here, the "overall equipment effectiveness" is abbreviated to OEE (Overall Equipment Effectiveness), and is calculated by "availability" × "performance" × "quality". The "availability" is one of the OEE indexes, and represents the proportion of time in which production equipment is actually in operation relative to the scheduled operation time. Further, the "performance" is one of the OEE indexes, and represents the ratio of the actual manufacturing speed of the production equipment to the designed manufacturing speed. The "quality" is one of the OEE indexes, and represents the proportion of the number of non-defective items relative to the total number of products.

Note that "energy effectiveness of production equipment k" improves by an improvement in the overall equipment effectiveness or a reduction in the electrical energy consumption. Accordingly, by achieving operations improvement (i.e., increasing the availability or yield) or replacing the existing equipment by equipment of high energy effectiveness, the "energy effectiveness of production equipment k" can be improved.

Further, the "production effectiveness per area of a region where production equipment k is provided" improves by an improvement in the overall equipment effectiveness or a reduction in the provision area of the production equipment. Accordingly, in addition to operations improvement, by modifying the existing production equipment to be compact production equipment, the "production effectiveness per area of a region where production equipment k is provided" can be improved.

As will be described later, by the energy management supporting apparatus 1 presenting a change in the elements of specific consumptions of each of the various types of equipment to the user, the user can analyze and specify the cause of a reduction in effectiveness of each of the various types of equipment with ease.

### [Exemplary Display Screen]

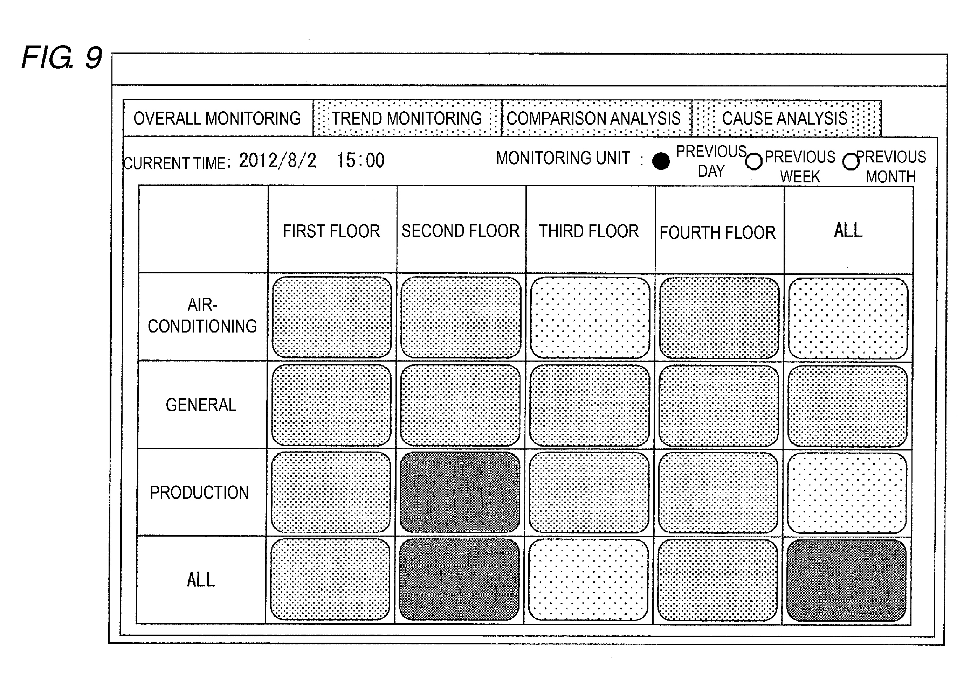

Next, with reference to Figs. 9 to 15, exemplary display screens displayed by the display control unit 26 on the display unit 15 will be described. Figs. 9 to 15 are diagrams each showing an exemplary display screen displayed by the display control unit 26 on the display unit 15. Note that, the display screen shown below is merely of an exemplary nature, and should be changed as appropriate in accordance with the intended use of the user.

Firstly, with reference to Fig. 9, an exemplary display screen (overall monitoring screen) that appears when the display control unit 26 displays the determination result determined by the determination unit 25 on the display unit 15 will be described. Here, it is assumed that not only the specific consumptions of each of the various types of equipment in the entire building 6 and the specific consumption of the entire building 6, but also the specific consumptions of each group of each of the various types of equipment and the specific consumption of each floor and each room (floor specific consumption, room specific consumption) are calculated. Further, it is assumed that, a daily average specific consumption (kWh/m²) is calculated as each of the specific consumptions.

Here, as shown in Fig. 9, the display control unit 26 displays each of the various types of equipment and the floors of the building 6 in a matrix. Here, based on the determination result, when the specific consumption value is equal to or less than the management reference value and equal to or less than the specific consumption value of the previous day, the display control unit 26 displays the corresponding portion in blue. When the specific consumption value is equal to or less than the management reference value and greater than the specific consumption value of the previous day, the display control unit 26 displays the corresponding portion in yellow (lightest shading). When the specific consumption value is greater than the management reference value, the display control unit 26 displays the corresponding portion in red (darkest shading).

Specifically, in the example shown in Fig. 9, the cell of the air-conditioning specific consumption of the entire building 6, that of the air-conditioning specific consumption of the third floor, that of the product specific consumption of the entire building 6, and that of the floor specific consumption of the third floor are shown in yellow, and the cell of the product specific consumption of the second floor, that of the floor specific consumption of the second floor, and that of the specific consumption of the building 6 are shown in red.

When the user changes the monitoring unit (when the previous-week checkbox or the previous-month checkbox is clicked) while the overall monitoring screen shown in Fig. 9 is displayed, the determination unit 25 again performs determination with the changed comparison targets, and presents the determination result to the display control unit 26. Then, the display control unit 26 displays the presented determination result. Note that, it is also possible that the determination unit 25 makes determinations in advance as to all the comparison targets such as the previous day, the previous week, and the previous month, and presents the determination result to the display control unit 26. In this case, the display control unit 26 changes the display of the display screen in accordance with the operated instruction from the user.

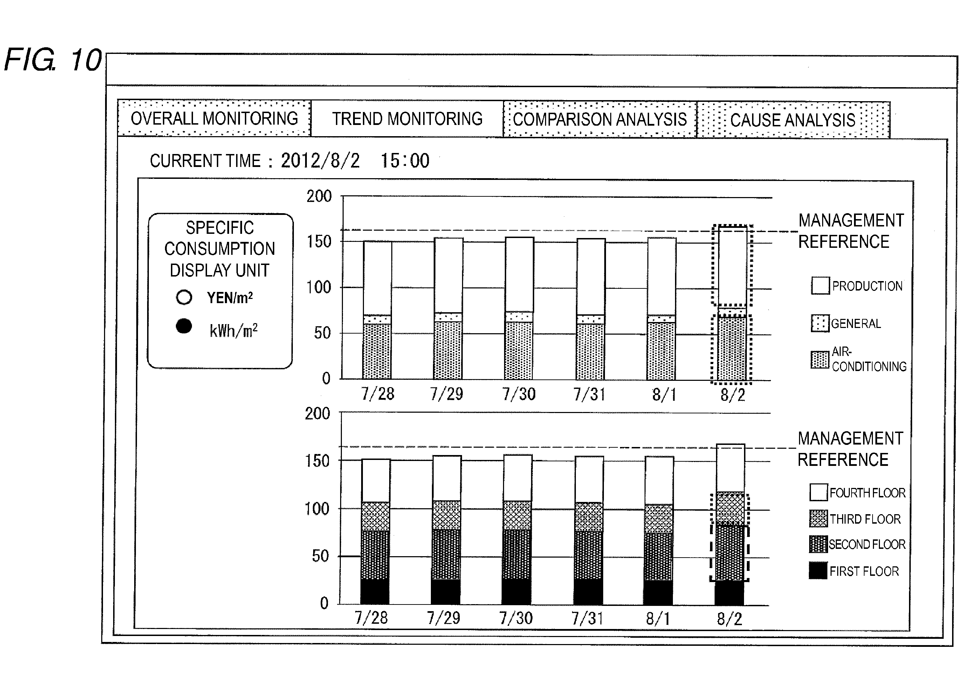

Next, with reference to Fig. 10, an exemplary display screen (trend monitoring screen) showing temporal changes in the specific consumptions will be described. When the user clicks the trend monitoring tab while the overall monitoring screen shown in Fig. 9 is displayed, the display control unit 26 displays the trend monitoring screen shown in Fig. 10.

As shown in Fig. 10, the trend monitoring screen displays daily average specific consumption for each of six days including the current day. Further, at the upper section in the screen, the product specific consumption, the air-conditioning specific consumption and the general specific consumption in the entire building 6 and the specific consumption of the building 6 are shown in a stacked bar chart, and at the lower section of the screen, the floor specific consumption of each floor and the specific consumption of the building 6 are shown in a stacked bar chart.

Note that, in the example shown in Fig. 10, though the specific consumptions for six days are shown, the daily average specific consumptions for seven days (i.e., a week) including the current day (seven bars) may be displayed when "the previous day" is selected. Further, when "the previous week" is selected, the specific consumptions for five weeks including the week of the current day (five bars) may be displayed. Still further, when "the previous month" is selected, the specific consumptions for six months including the month of the current day (six bars) may be displayed. Still further, the user may set the displayed period of the trend monitoring for each of "the previous day", "the previous week" and "the previous month".

Further, those shown in yellow or red on the overall monitoring screen shown in Fig. 9 are displayed on the trend monitoring screen in yellow or red frame with flashing. Specifically, the parts corresponding to the air-conditioning specific consumption of the entire building 6, the product specific consumption of the entire building 6 and the floor specific consumption of the third floor of the current day (August 2, 2012) are each displayed in yellow frame with flashing, and the part corresponding to the floor specific consumption of the second floor of the current day (August 2, 2012) is displayed in red frame with flashing.

Further, as shown in Fig. 10, the management reference value of the specific consumption of the building 6 is shown as being overlaid on the bar chart.

Still further, when the user changes the display unit of the specific consumption (when the yen/m² checkbox is clicked) while the trend monitoring screen shown in Fig. 10 is displayed, the display control unit 26 displays the specific consumptions with the changed unit.

As described above, on the overall monitoring screen and the trend monitoring screen, the parts considered to be the main factor of an increase in the specific consumption of the building 6 (the red and yellow cells) can be shown. Basically, those parts exceeding the management reference value should be given higher priority in improvement. However, in some cases, it is preferable to improve the part indicated by the yellow cell, in terms of return on investment or viability.

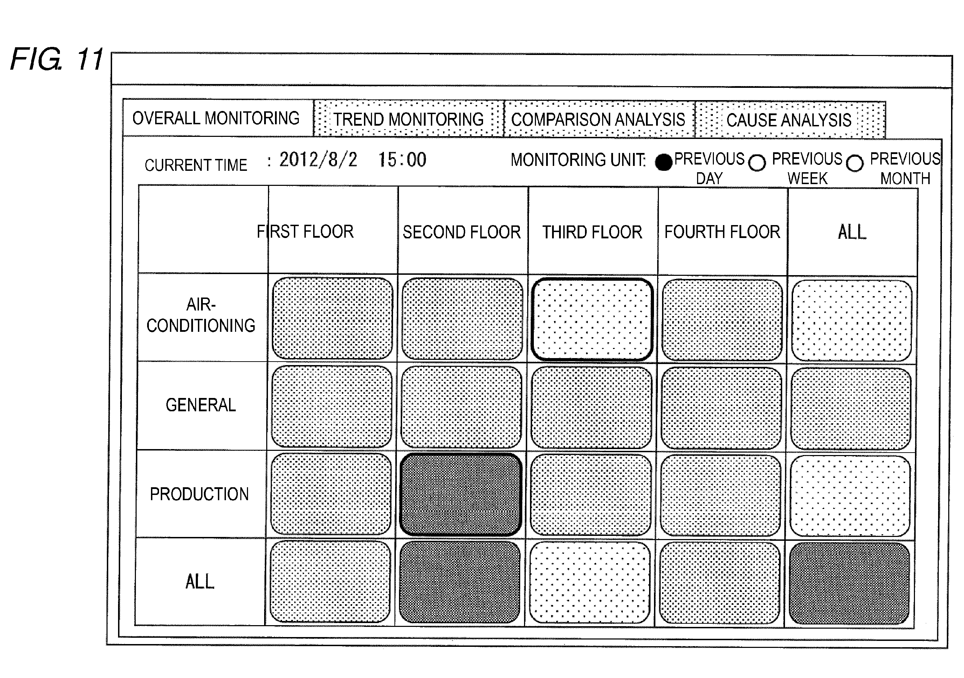

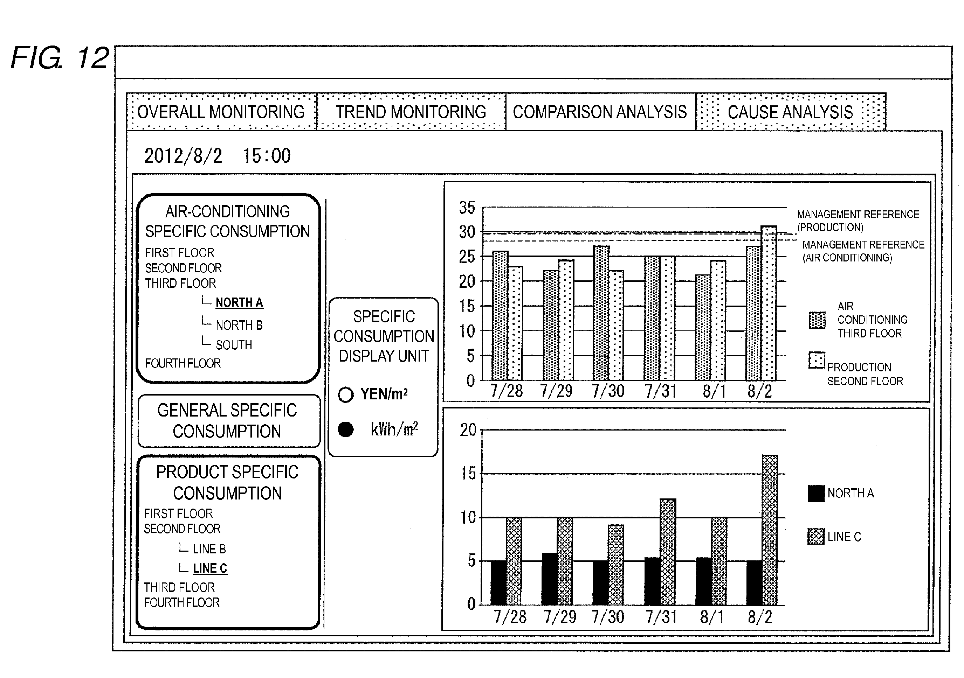

Accordingly, in the following, with reference to Figs. 11 and 12, an exemplary comparison analysis screen in which those parts with an increase in the specific consumption are compared with each other, in order to determine which part is preferable to be addressed to improve the effectiveness will be described.

When the user selects a plurality of cells while the overall monitoring screen shown in Fig. 9 is displayed, the display control unit 26 displays the comparison analysis screen. Here, as shown in Fig. 11, it is assumed that the user selects the yellow cell of the air-conditioning specific consumption of the third floor, and the red cell of the product specific consumption of the second floor. Fig. 12 shows an exemplary screen displayed at this time by the display control unit 26.

As shown in Fig. 12, the display control unit 26 displays the layer structure of the air-conditioning equipment 4, the general equipment 5 and the production equipment 3 on the left side of the screen. Here, since the user has selected the yellow cell of the air-conditioning specific consumption of the third floor and the red cell of the product specific consumption of the second floor, the sub-groups of the air-conditioning equipment on the third floor (the rooms on the third floor) and the sub-groups of the production equipment on the second floor (the lines on the second floor) are displayed.

Further, as shown in Fig. 12, out of the air-conditioning specific consumptions of the rooms on the third floor selected by the user, the room with the greatest proportion of the specific consumption relative to the air-conditioning specific consumption of the third floor is highlighted in the display. Specifically, the characters "North A" of the third floor of the air-conditioning equipment 4 are displayed in bold type. Similarly, as to the production equipment 3, out of the product specific consumptions of the lines on the second floor selected by the user, the line with the greatest proportion of the specific consumption relative to the product specific consumption of the second floor is highlighted in the display. In the example shown in Fig. 12, the characters "line C" of the second floor of the production equipment 3 are displayed in bold type.

Still further, as shown in Fig. 12, the display control unit 26 displays, at the upper right section of the screen in a time-line manner, the air-conditioning specific consumption of the third floor and the product specific consumption of the second floor selected by the user. Still further, the management reference value of the air-conditioning specific consumption of the third floor and the management reference value of the product specific consumption of the second floor are displayed as being overlaid.

Still further, as shown in Fig. 12, the display control unit 26 displays, at the lower right section of the screen in a time-line manner, the specific consumption with the greatest proportion relative to the air-conditioning specific consumption of the third floor out of the air-conditioning specific consumptions of the rooms on the third floor selected by the user, and the specific consumption with the greatest proportion relative to the product specific consumption of the second floor out of the product specific consumptions of the lines on the second floor selected by the user.

In this manner, displaying comparison as to the increased parts of specific consumption and their sub-groups, the user can easily determine the part in which measures to improve should be taken. Herein, since a sharp increase is observed in the specific consumption of the production equipment 3 in the line C on the second floor, it is considered that the production equipment 3 in the line C on the second floor is the cause of the worsening of the specific consumption. In order to specify the cause in more detail, a cause analysis of the production equipment 3 in the line C on the second floor should be carried out.

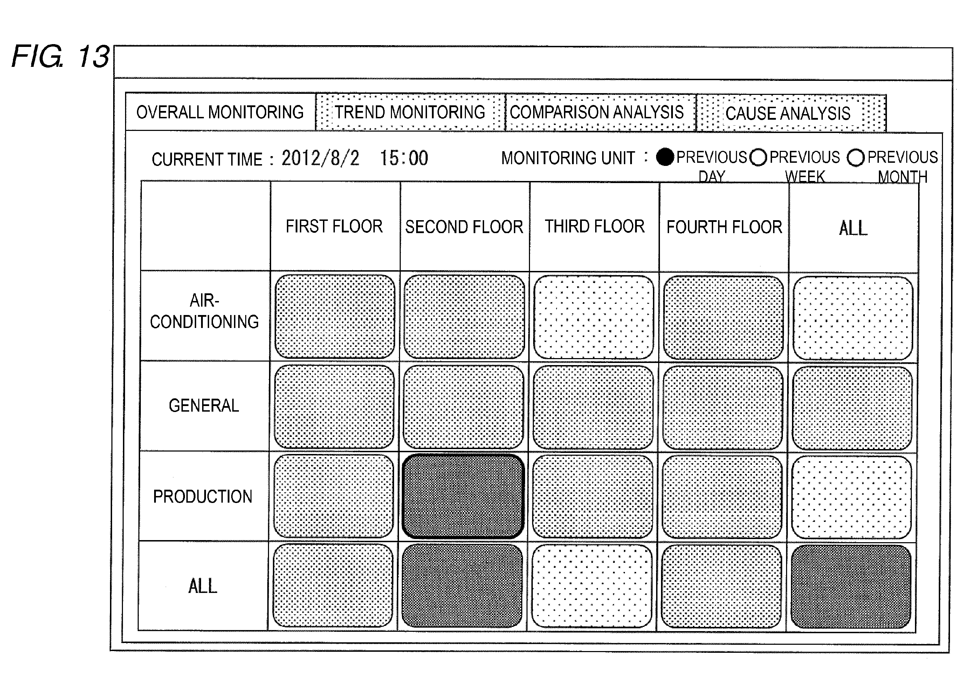

Accordingly, next, in order to specify the cause in more detail, with reference to Figs. 13 to 15, an exemplary cause analysis screen for analyzing the increased part of the specific consumption will be described in more detail.

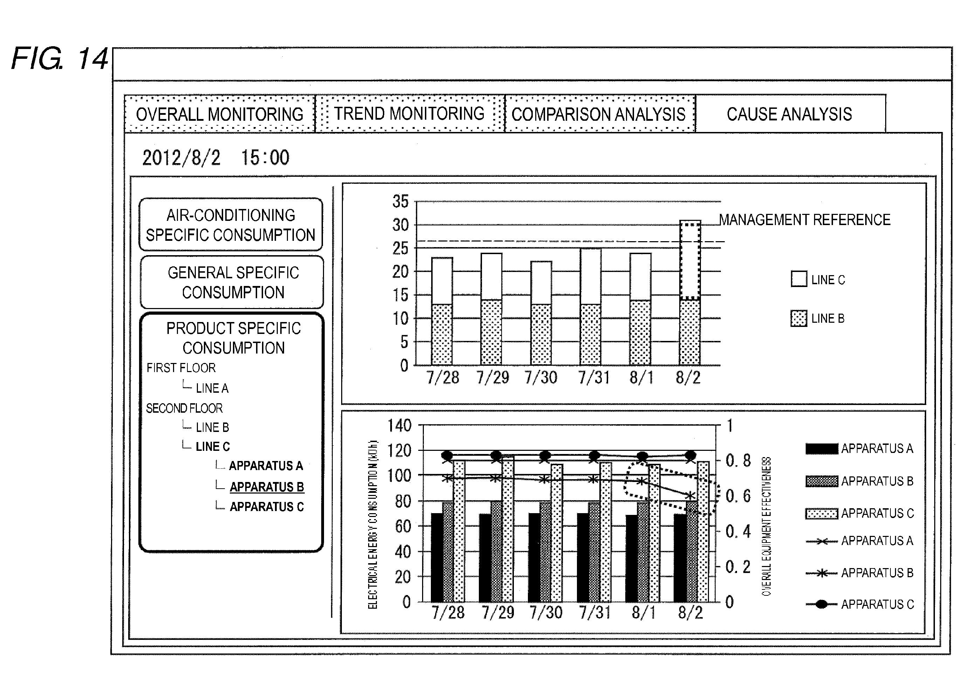

When the user selects one cell while the overall monitoring screen shown in Fig. 9 is displayed, the display control unit 26 displays a cause analysis screen. Herein, as shown in Fig. 13, it is assumed that the user has selected the red cell of the product specific consumption of the second floor. Fig. 14 shows an exemplary screen that is displayed at this time by the display control unit 26.

As shown in Fig. 14, the display control unit 26 displays, on the left side of the screen, the layer structure of the air-conditioning equipment 4, the general equipment 5 and the production equipment 3. Here, since the user has selected the red cell of the product specific consumption of the second floor, the sub-groups of the production equipment 3 on the second floor (the lines on the second floor) are displayed. Further, the sub-groups (the apparatuses constituting the line C) of the production equipment 3 in "line C" on the second floor are displayed.

Further, as shown in Fig. 14, out of the product specific consumptions in the lines on the second floor selected by the user, the line with the greatest proportion of the specific consumption relative to the product specific consumption of the second floor and the apparatuses constituting that line are highlighted in the display. In the example shown in Fig. 14, the characters "line C" on the second floor of the production equipment 3 and the characters "apparatus A", "apparatus B" and "apparatus C" are displayed in bold type. Further, as will be described later, since the apparatus B is considered to be the main factor of the increase in the specific consumption, the characters "apparatus B" are underlined.

Further, as shown in Fig. 14, the display control unit 26 displays, at the upper right section of the screen in a stacked bar chart in a time-line manner, the specific consumption of the sub-groups (the lines on the second floor) of the product specific consumption of the second floor selected by the user. Still further, the management reference value of the product specific consumption of the second floor is also displayed as being overlaid. Still further, herein, since the specific consumption value of the production equipment in the line C exceeds the management reference value, the part corresponding to the specific consumption of the production equipment 3 in the line C of the current day (August 2, 2012) is displayed in red frame with flashing.

Further, as shown in Fig. 14, the display control unit 26 displays, at the lower right section of the screen in a bar chart in a time-line manner, the specific consumptions of the apparatuses A to C constituting the line C. Still further, the overall equipment effectiveness of each of the apparatuses A to C is displayed in a line chart. Herein, since the overall equipment effectiveness of the apparatus B of the current day is equal to or less than a predetermined threshold value, the current day part in the chart showing the overall equipment effectiveness of the apparatus B is displayed in red frame with flashing.

In this manner, displaying the specific consumptions and the various physical quantities such as the overall equipment effectiveness of the sub-groups under the layer where the specific consumption is increased, the user can easily determine against the part in which measures to improve should be taken. Here, since the overall equipment effectiveness of the apparatus B in the line C on the second floor is sharply worsening, the apparatus B in the line C on the second floor can be specified as the cause of worsening of the specific consumption.

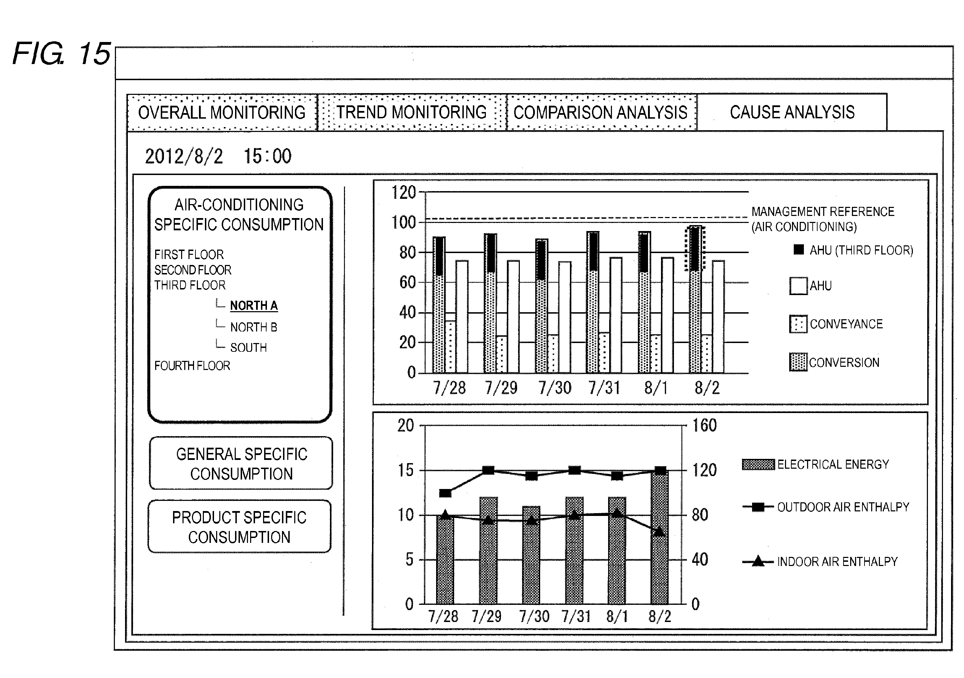

Further, as another example, the case where the user selects the cell of the air-conditioning specific consumption of the third floor will be described. Fig. 15 shows an exemplary cause analysis screen at this time.

As shown in Fig. 15, the display control unit 26 displays, on the left side of the screen, the layer structure of the air-conditioning equipment 4, the general equipment 5 and the production equipment 3. Here, since the user has selected the cell of the air-conditioning specific consumption of the third floor, the sub-groups of the air-conditioning equipment 4 on the third floor (the rooms on the third floor) are displayed.

Further, as shown in Fig. 15, out of the air-conditioning specific consumptions of the rooms on the third floor selected by the user, the room with the greatest proportion of the specific consumption relative to the air-conditioning specific consumption of the third floor is highlighted in the display. Specifically, the characters "North A" on the third floor of the air-conditioning equipment 4 are displayed in bold type.

Still further, as shown in Fig. 15, the display control unit 26 displays, at the upper right section of the screen in a stacked bar chart in a time-line manner, the element value of the conversion effectiveness, that of the conveyance effectiveness and that of the AHU effectiveness, out of the elements constituting the air-conditioning specific consumption of the entire building 6. Further, the element value of the AHU effectiveness being the element constituting the air-conditioning specific consumption of the third floor is displayed as being overlaid. Herein, since the element value of the AHU effectiveness being the element constituting the air-conditioning specific consumption of the third floor is lower than the predetermined threshold value, the part corresponding to the AHU effectiveness being the element constituting the air-conditioning specific consumption of the third floor on the current day (August 2, 2012) is displayed in red frame with flashing.

Further, as shown in Fig. 15, the display control unit 26 displays, at the lower right section of the screen in a time-line manner, the amount of the electrical energy consumption of the air-conditioning equipment 4 on the third floor, and the outdoor air enthalpy as well as the indoor air enthalpy of the third floor. By referring to the chart in the lower right section of the screen, the user can determine that the electrical energy of the AHU has increased because the indoor air enthalpy of the third floor on the current day has dropped.

Note that, in this manner, the display control unit 26 displays not only the determination result and the specific consumption, but also the management reference value and the elements of the specific consumption. In addition thereto, the display control unit 26 displays sensor data acquired by the sensor data acquiring unit 21and various types of physical quantity such as the overall equipment effectiveness calculated using the sensor data and the like.

### [Exemplary Realization by Software]

The control block (particularly the control unit 11) of the energy management supporting apparatus 1 may be realized by logic circuitry (hardware) formed on an integrated circuit (IC chip) or the like, or may be realized by software using a CPU (Central Processing Unit).

In the latter case, the energy management supporting apparatus 1 includes a CPU executing commands of a program being software realizing each function, a ROM (Read Only Memory) or a storage apparatus in which the program and various types of data are stored so as to be readable by a computer (or the CPU) (the ROM and the storage apparatus are each referred to as a "recording medium"), a RAM (Random Access Memory) in which the program is expanded, and the like. Then, by the computer (or the CPU) reading the program from the recording medium and executing the same, the object of the present invention is achieved. As the recording medium, a "non-transitory tangible medium", e.g., a tape, a disk, a card, a semiconductor memory, and a programmable logic circuit, can be used. Further, the program may be supplied to the computer via any transmission medium that can transmit the program (communications network, airwaves and the like). Note that, the present invention can be realized in a manner of data signals embedded in the carrier wave, which is the realization of the above-described program by an electronic transmission.

### [Conclusion]

An energy management supporting apparatus according to a first aspect of the present invention for managing an energy consumption of at least two types of equipment out of air-conditioning equipment, production equipment and general equipment provided in a prescribed region, the energy management supporting apparatus comprising: an acquiring part configured to acquire an energy consumption of each of the various types of equipment; a specific consumption calculating part configured to calculate a magnitude of the energy consumption of each of the various types of equipment relative to a size of a region where each of the various types of equipment are provided, as a specific consumption of each of the various types of equipment, based on the energy consumption of each of the various types of equipment acquired by the acquiring part; and an output part configured to output the specific consumption of each of the at least two types of equipment calculated by the specific consumption calculating part.

With the configuration described above, the specific consumption calculating part performs calculation unifying the specific consumption of the air-conditioning equipment, that of the production equipment and that of the general equipment. That is, since the specific consumptions of each of the various types of equipment are based on the same index, each of the various types of equipment can be compared with one another with ease. Accordingly, by referring to the specific consumption of each of the various types of equipment output by the output part, the user can advantageously determine of the piece of the equipment whose effectiveness is worsening or narrow the factors of worsening with ease.

An energy management supporting apparatus according to a second aspect of the present invention may further comprise, in the configuration of the first aspect, a management reference setting part configured to set a management reference value for determining whether the specific consumption is good or poor. The specific consumption calculating part may calculate a specific consumption of the prescribed region as a sum of the specific consumption of each of the various types of equipment provided in the region. The management reference setting part may set the management reference value for the specific consumption of each of the various types of equipment and the management reference value for the specific consumption of the region where each of the various types of equipment are provided, based on a specific consumption of each of the various types of equipment previously calculated by the specific consumption calculating part.

With the configuration described above, the specific consumption calculating part calculates the specific consumption of the prescribed region as a sum of the specific consumption of each of the various types of equipment provided in the region. Accordingly, whether the effectiveness is good or poor can be determined on a region-by-region basis, the region being a building, a floor, a room or the like where each of the various types of equipment are provided. Further, comparison among a plurality of regions can also be carried out. Accordingly, the user can easily determine the region in which effectiveness is worsening, or the like.

With the configuration described above, the management reference setting part sets the management reference value for the specific consumption of each of the various types of equipment and the management reference value for the specific consumption of the region where each of the various types of equipment are provided, based on the past history of the specific consumption of each of the various types of equipment. As described above, since the specific consumption of the region is a sum of the specific consumption of each of the various types of equipment provided in the region, not only the management reference value for the specific consumption of each of the various types of equipment, but also the management reference value for the specific consumption of the region can be automatically set based on the past history.

An energy management supporting apparatus according to a third aspect of the present invention may further comprise, in the configuration of the first aspect, an input unit configured to accept an operation instruction from a user; and a management reference setting part setting a management reference value for determining whether the specific consumption is good or poor. The specific consumption calculating part may calculate a specific consumption of the prescribed region as a sum of the specific consumption of each of the various types of equipment provided in the region. When the user inputs the management reference value for the specific consumption of the region where each of the various types of equipment is provided, the management reference setting part may set the management reference value for the specific consumption of each of the various types of equipment in the region, based on a proportion of the specific consumption of each of the various types of equipment in the region relative to the specific consumption of the region and the input management reference value.

With the configuration described above, the management reference setting part sets the management reference value for the specific consumption of each of the various types of equipment in the region, based on the management reference value for the specific consumption of the region input by the user and the proportion of the specific consumption of each of the various types of equipment in the region relative to the specific consumption of the region.

Conventionally, since the unit of the specific consumption of a region such as a building and that of the specific consumption of each of the various types of equipment are different from each other, i.e., the region and each of the various types of equipment are based on different standards, the target value such as the management reference value has been individually set. That is, the work of setting the management reference value is troublesome.

However, in the present invention, since the specific consumption of the region and that of each of the various types of equipment are unified, and the specific consumption of the region is set to be a sum of the specific consumption of each of the various types of equipment, the user is just required to input the management reference value for the specific consumption of the region in order to set the management reference value for the specific consumption of each of the various types of equipment provided in that region. That is, setting of the management reference value is facilitated.

An energy management supporting apparatus according to a fourth aspect of the present invention may further comprise, in the configuration of the second aspect, a determination part configured to determine whether or not the specific consumption calculated by the specific consumption calculating part exceeds the management reference value for the specific consumption. The output part may present a determination result made by the determination part.

With the configuration described above, the output part presents whether or not the specific consumption of each of the various types of equipment or the specific consumption of the region exceeds the management reference value. Accordingly, the presentation allows the user to easily specify the equipment or the region in which the effectiveness is worsening.

In an energy management supporting apparatus according to a fifth aspect of the present invention, in the configuration of the fourth aspect, when the specific consumption calculated by the specific consumption calculating part is equal to or less than the management reference value of the specific consumption, the determination part may further determine whether or not the specific consumption calculated by the specific consumption calculating part exceeds a past specific consumption.

With the configuration described above, the output part further presents as to whether or not the specific consumption of each of the various types of equipment or the specific consumption of the region, each being equal to or less than the management reference value, exceeds a past specific consumption (e.g., the specific consumption of the previous day). Accordingly, the presentation allows the user to easily specify the equipment or the region in which the effectiveness is worsening.

In an energy management supporting apparatus according to a sixth aspect of the present invention, in the configuration of the fourth aspect, the output part may display, in a matrix on a display unit, the determination result of the specific consumption of each of the various types of equipment and the determination result of the specific consumption of the region where each of the various types of equipment are provided. The output part may display in highlight the determination result indicative of the specific consumption exceeding the management reference value.

In an energy management supporting apparatus according to a seventh aspect of the present invention, in the configuration of the second aspect, the output part may display, in a time-line manner on a display unit, at least one of the specific consumption of each of the various types of equipment and the specific consumption of the region where each of the various types of equipment are provided.

With the configuration described above, the user can easily grasp any temporal change in the specific consumption of each of the various types of equipment and the specific consumption of the region. Hence, the user can easily specify the equipment or the region in which the effectiveness is worsening.

In an energy management supporting apparatus according to an eighth aspect of the present invention, in the configuration of the seventh aspect, each of the various types of equipment may be grouped by one or more layers. The specific consumption calculating part may calculate the specific consumption for each group of each of the various types of equipment. In displaying the specific consumption of a prescribed one of the groups of any of the various types of equipment in a time-line manner on the display unit, the output part may present, out of sub-groups belonging to a layer under the prescribed group, a sub-group with the greatest proportion of the specific consumption relative to the specific consumption of the prescribed group.

With the configuration described above, for example when the specific consumption of a prescribed group is worsening, the user can easily determine that the presented sub-group is the main factor contributing to the worsening. That is, the user can easily determine the sub-group, out of those belonging to the prescribed group, in which measures to improve should be taken.

In an energy management supporting apparatus according to a ninth aspect of the present invention, in the configuration of the seventh aspect, the output part may display the specific consumption in a time-line manner, as well as the management reference value for the specific consumption and at least one of various types of physical quantity.

With the configuration described above, the user can easily grasp whether or not the specific consumption of each of the various types of equipment and the specific consumption of the region exceed their respective management reference values, and the causal relationship between a change in the specific consumption and a change in any of the various types of physical quantity.

In an energy management supporting apparatus according to a tenth aspect of the present invention, in the configuration of the first aspect, the specific consumption of each of the various types of equipment may be made up of a plurality of elements. The specific consumption calculating part may calculate an element value for each of the elements forming the specific consumption of each of the various types of equipment. The output part may display, in a time-line manner on a display unit, the element value of at least one of the elements forming the specific consumption of each of the various types of equipment calculated by the specific consumption calculating part.

With the configuration described above, the user can easily grasp a temporal change in the elements forming the specific consumption of each of the various types of equipment and the elements forming the specific consumption of the region. That is, the user can easily determine which element is attributable to the worsening of the specific consumption.

A method for controlling an energy management supporting apparatus according to an eleventh aspect of the present invention is a method for managing an energy consumption of at least two types of equipment out of air-conditioning equipment, production equipment and general equipment provided in a prescribed region. The method includes: an acquiring step for acquiring an energy consumption of each of the various types of equipment; a specific consumption calculating step for calculating a magnitude of the energy consumption of each of the various types of equipment relative to a size of a region where each of the various types of equipment are provided, as a specific consumption of each of the various types of equipment, based on the energy consumption of each of the various types of equipment acquired in the acquiring step; and an outputting step for outputting the specific consumption for each of the at least two types of equipment calculated in the specific consumption calculating step.

An energy management supporting apparatus according to any aspect of the present invention may be realized by a computer. In this case, the present invention encompasses a control program for an energy management supporting apparatus for causing a computer to realize the energy management supporting apparatus to operate, in which the computer is caused to operate as each of the parts included in the energy management supporting apparatus, as well as a computer readable recording medium recording the same.

The present invention is not limited to the embodiments described above, and various changes can be made within the range defined by the claims. That is, the technical range of the present invention encompasses any embodiment that can be achieved by combinations of techniques appropriately modified within the range defined by the claims.

The present invention is applicable to an energy management supporting apparatus that manages the energy consumption of each of various types of equipment provided in a building such as a business office and a factory.

## Claims

1. An energy management supporting apparatus (1) for managing an energy consumption of at least two types of equipment out of air-conditioning equipment (4), production equipment (3) and general equipment (5) provided in a prescribed region (6),
the apparatus (1) **characterized by** comprising:
an acquiring part (21) configured to acquire an energy consumption of each of the various types of equipment (3, 4, 5);
a specific consumption calculating part (22) configured to calculate a magnitude of the energy consumption of each of the various types of equipment (3, 4, 5) relative to a size of a region where each of the various types of equipment (3, 4, 5) is provided as a specific consumption of each of the various types of equipment (3, 4, 5), based on the energy consumption of each of the various types of equipment (3, 4, 5) acquired by the acquiring part (21); and
an output part (26) configured to output the specific consumption of each of the at least two types of equipment calculated by the specific consumption calculating part (22).

2. The energy management supporting apparatus (1) according to claim 1, **characterized by** further comprising:
a management reference setting part (24) configured to set a management reference value for determining whether the specific consumption is good or poor, wherein
the specific consumption calculating part (22) is configured to calculate a specific consumption of the prescribed region (6) as a sum of the specific consumption of each of the various types of equipment (3, 4, 5) provided in the region, and
the management reference setting part (24) is configured to set the management reference value for the specific consumption of each of the various types of equipment (3, 4, 5) or the management reference value for the specific consumption of the region where each of the various types of equipment (3, 4, 5) are provided, based on a specific consumption of each of the various types of equipment (3, 4, 5) previously calculated by the specific consumption calculating part (22).

3. The energy management supporting apparatus (1) according to claim 1, **characterized by** further comprising:
an input unit configured to accept an operation instruction from a user; and
a management reference setting part (24) configured to set a management reference value for determining whether the specific consumption is good or poor, wherein
the specific consumption calculating part (22) is configured to calculate a specific consumption of the prescribed region (6) as a sum of the specific consumption of each of the various types of equipment (3, 4, 5) provided in the region,
when the user inputs a management reference value for the specific consumption of the region where each of the various types of equipment (3, 4, 5) is provided, the management reference setting part (24) is configured to set the management reference value for the specific consumption of each of the various types of equipment (3, 4, 5) in the region, based on a proportion of the specific consumption of each of the various types of equipment (3, 4, 5) in the region relative to the specific consumption of the prescribed region and the input management reference value.

4. The energy management supporting apparatus (1) according to claim 2, **characterized by** further comprising:
a determination part (25) configured to determine whether or not the specific consumption calculated by the specific consumption calculating part (22) exceeds the management reference value for the specific consumption, wherein
the output part (26) is configured to present a determination result made by the determination part (25).

5. The energy management supporting apparatus (1) according to claim 4, **characterized in that**
when the specific consumption calculated by the specific consumption calculating part (22) is equal to or less than the management reference value for the specific consumption, the determination part (25) is further configured to determine whether or not the specific consumption calculated by the specific consumption calculating part (22) exceeds a past specific consumption.

6. The energy management supporting apparatus (1) according to claim 4, **characterized in that**
the output part (26) is configured to display, in a matrix on a display unit, the determination result of the specific consumption of each of the various types of equipment (3, 4, 5) and the determination result of the specific consumption of the region where each of the various types of equipment (3, 4, 5) is provided, the output part (26) highlighting on the display unit the determination result indicative of the specific consumption exceeding the management reference value.

7. The energy management supporting apparatus (1) according to claim 2, **characterized in that**
the output part (26) is configured to display, in a time-line manner on a display unit, at least one of the specific consumption of each of the various types of equipment (3, 4, 5) and the specific consumption of the region where each of the various types of equipment (3, 4, 5) are provided.

8. The energy management supporting apparatus (1) according to claim 7, **characterized in that**
each of the various types of equipment (3, 4, 5) are grouped by one or more layers,
the specific consumption calculating part (22) is configured to calculate the specific consumption for each group of each of the various types of equipment (3, 4, 5),
in displaying the specific consumption of a prescribed one of the groups of any of the various types of equipment (3, 4, 5) in a time-line manner on the display unit, the output part (26) is configured to present, out of sub-groups belonging to a layer under the prescribed group, a sub-group with the greatest proportion of the specific consumption relative to a specific consumption of the prescribed group.

9. The energy management supporting apparatus (1) according to claim 7, **characterized in that**
the output part (26) is configured to display the specific consumption in a time-line manner, and the management reference value for the specific consumption and at least one of various types of physical quantity.

10. The energy management supporting apparatus (1) according to claim 1, **characterized in that**
the specific consumption of each of the various types of equipment (3, 4, 5) is made up of a plurality of elements,
the specific consumption calculating part (22) is configured to calculate an element value for each of the elements forming the specific consumption of each of the various types of equipment (3, 4, 5), and
the output part (26) is configured to display, in a time-line manner on a display unit, the element value of at least one of the elements forming the specific consumption of each of the various types of equipment (3, 4, 5) calculated by the specific consumption calculating part (22).

11. A method for controlling an energy management supporting apparatus (1) for managing an energy consumption of at least two types of equipment out of air-conditioning equipment (4), production equipment (3) and general equipment (5) provided in a prescribed region (6),
the method **characterized by** comprising:
an acquiring step for acquiring an energy consumption of each of the various types of equipment (3, 4, 5);
a specific consumption calculating step for calculating a magnitude of the energy consumption of each of the various types of equipment (3, 4, 5) relative to a size of a region where each of the various types of equipment (3, 4, 5) are provided, as a specific consumption of each of the various types of equipment (3, 4, 5), based on the energy consumption of each of the various types of equipment (3, 4, 5) acquired in the acquiring step; and
an outputting step for outputting the specific consumption for each of the at least two types of equipment calculated in the specific consumption calculating step.

12. A control program for causing the energy management supporting apparatus (1) according to claim 1 to operate, the control program causing a computer to function as each of the parts.

13. A computer readable recording medium recording the control program according to claim 12.
